# FASCICULE DE BREVET EUROPEEN

(11) **EP 0 466 623 B1**
(45) Date de publication et mention de la délivrance du brevet: **26.10.1994**
(21) Numéro de dépôt: 91440055.1
(22) Date de dépôt: 09.07.1991
(51) Int. Cl.: G01L 11/00

(54) **Capteur de pression à fibres optiques à compensation de température**
Druckwandler mit optischen Fasern und Temperaturausgleich
Fiber-optic pressure transducer with temperature compensation

(30) Priorité: 09.07.1990 FR 9008864
(43) Date de publication de la demande: 15.01.1992
(73) Titulaire: IWKA Aktiengesellschaft, D-76135 Karlsruhe (DE)
(72) Inventeur: Herzog, Jean-Philippe, F-68230 Turckheim (FR); Meyrueis, Patrick, F-67000 Strasbourg (FR)
(74) Mandataire: Lichti, Heiner, Dipl.-Ing.

(56) Documents cités:
- EP-A- 0 242 894
- EP-A- 0 345 188
- DE-C- 3 541 733
- PATENT ABSTRACTS OF JAPAN vol. 9, no. 296 (P-407)(2019) 22 Novembre 1985 & JP-A-60 133 336
- OPTICAL FIBER SENSORS-1988 TECHNICAL DIGEST SERIES, New Orleans, US, 27-29 janvier 1988, vol.2, partie 2, pages 495-501, Optical Society of America, Washington D.C.; D.Chardon et al: "Simultaneous measurement of temperature and pressure variations with a single mode fiber"

## Description

La présente invention se rapporte à un capteur de pression à fibres optiques et compensation de température, avec deux enroulements de fibres optiques formés chacun sur un cylindre, de façon à garder, en sortie, le même état de polarisation et la même longueur, les cylindres constituant une seule et même pièce mécanique, au moins un enroulement étant soumis à pression à mesurer et exploité en mesures interlérométriques sous lumière cohérente.

Elle concerne plus particulièrement un capteur de pression à fibres optiques du type utilisant un montage interférométrique.

Les capteurs de pression connus utilisant des fibres optiques peuvent être rangés dans trois catégories principales, selon que la pression module l'intensité, l'état de polarisation ou la phase de l'onde lumineuse.

Parmi les capteurs de la première catégorie, on distingue les capteurs à réflexion dans lesquels la lumière retournée dans la fibre est modulée en intensité par réflexion sur une membrane dont le déplacement ou la déformation est fonction de la pression appliquée. On distingue aussi les capteurs à décalage de position dans lesquels une fibre fixe est placée en regard d'une fibre soumise à un déplacement dû à la pression.

On distingue également les capteurs à microcourbures dans lesquels les variations de pression sont transmises à la fibre optique par l'intermédiaire d'un système mécanique déformant soumis à la pression engendrée par un fluide. La propagation des rayons lumineux se trouve modifiée par les micro-courbures ainsi appliquées à la fibre. Il en résulte une variation de l'intensité transmise qui traduit les variations de pression. La simplicité apparente de ces capteurs ne traduit ni leur efficacité ni leur sensibilité. L'emploi d'un mécanisme de conversion extérieur à la fibre limite cependant dans la plupart des cas l'étendue du domaine de mesure. Par ailleurs, les risques de destruction en cas de surcharge et les problèmes liés à l'emploi de membranes (hystérésis notamment) constituent autant d'inconvénients.

En ce qui concerne les capteurs de pression à variation de polarisation, on mesure la variation de l'état de polarisation de la lumière liée à la variation de biréfringence provenant de la déformation élastique de la fibre sous l'effet de la pression. Ce type de capteur met en oeuvre des dispositifs complexes et de nombreux intermédiaires mécaniques et optiques qui rendent l'exploitation coûteuse et mal adaptée pour un milieu industriel.

Les capteurs de pression à variation de phase sont du type interférométrique et présentent une très grande sensibilité. Ils comprennent, en général, une fibre de référence isolée le plus possible du milieur extérieur et une fibre de mesure soumise aux variations de la grandeur physique à mesurer.

Le décalage de phase engendré par la modification de la grandeur physique à mesurer (par exemple la pression) provoque un défilement des franges d'interférence résultant de la superposition de deux ondes à la sortie de l'interféromètre.

Le "PATENT ABSTRACTS OF JAPAN", vol. 9, no. 296 (P-407) (2019) 22 Novembre 1985 et le JP-A-60 133 336 (SHIMAZU SEISAKUSHO K.K.), 16 Juillet 1985, montrent un capteur de pression à fibres optiques et compensation de température, avec deux enroulements de fibres optiques formés chacun sur un cylindre, de façon à garder, en sortie, le même état de polarisation et la même longueur, les cylindres constituant une seule et même pièce mécanique, au moins un enroulement étant soumis à pression à mesurer et exploité en mesures interférométriques sous lumière cohérente. Ce capteur n'a aucune compensation des effets dus à la température du type interférométrique.

Si divers avantages tels que la sensibilité et la vaste étendue du domaine de mesure démontrent la supériorité de ce type de capteurs, il reste la sensibilité à la température qui constitue le principal inconvénient.

Celle-ci s'avère particulièrement gênante dans tous les cas de milieux perturbés tels que ceux rencontrés dans le domaine industriel.

L'article OPTICAL FIBER SENSORS - 1988 TECHNICAL DIGEST SERIES, New Orleans, 27-29 janvier 1988, vol.2, partie 2, pages 495-501, Optical Society of America, Washington D.C.; D.Chardon et al: "Simultaneous measurement of temperature and pressure variations with a single mode fiber" montre qu'on peut calculer la pression et la température différentielles en mesurant les intensités transmises d'une lumière polarisée circulaire pour des angles différents.

Un ensemble de détection et de mesure pour fluide sous pression décrit dans EP-A-345 188 est caractérisé en ce qu'il comprend au moins deux couples (16) et (17) de deux fibres optiques dont une fibre de référence pour chaque couple présentant chacune un enroulement (12, 13) et (14, 15) présent dans des cellules respectives (10) et (11) dans lesquelles règnent des températures et pressions différentes, cellules en communication avec le fluide à mesurer à différents points de mesure, dans les fibres étant injecté un faisceau de lumière cohérente à partir d'un laser (22), on observe en sortie des fibres disposées en mode interférentiel, les franges d'interférence à l'aide d'une caméra et on enregistre leur défilement dans un système informatique. La compensation de température demande des circuits électroniques compliqués.

Un autre montage mettant en oeuvre deux fibres revêtues de matériaux différents de façon qu'elles conservent chacune la même sensibilité de température, mais des sensibilités différentes à la pression permet, de façon analogue, de mesurer la pression décorrelée des effets de la température, dans une seule cellule de mesure contenant les deux fibres. La différence avec le montage précédent consiste en ce que l'on ne mesure que l'effet de la pression et non celui de la température qui est éliminé par ce montage particulier. Ce montage demande des fibres particulières.

EP-A-242 894 montre un détecteur de pression, comprenant un corps creux longitudinal en matière élastique, fermé par une cloison, ledit corps présentant deux éléments tubulaires dont au moins un est à connecter à une source de pression, ainsi qu'une pluralité d'enfoncements sur une partie de sa longueur, délimités par des bords plus ou moins aigus qui s'étendent longitudinalement et dont la distance intermédiaire change en rapport avec la pression à mesurer, et comprenant une libre optique ayant une part d'enroulement autour des enfoncements et étant connectée par l'une des ses extrémités à une source lumineuse et par son autre extrémité à un photomètre pour mesurer la quantité de lumière issue de la source lumineuse et transmise par la fibre, caractérisé par un détecteur de différences de température, comprenant une seconde fibre optique, connectée par l'une de ses extrémités à un photomètre pour mesurer la quantité de lumière issue de la source lumineuse et transmise par la libre, montée autour des enfoncements et ayant au moins une part d'enroulement adjacente à l'un des éléments tubulaires correspondants, la part d'enroulement de la fibre optique mentionée en premier lieu étant montée sensiblement à mi-chemin autour des enfoncements pressurisés disposés de l'un côté de la cloison et les parts d'enroulement des deux fibres optiques ayant été assujetties au commencement et à la fin des bords correspondants des enfoncements.

L'invention a pour but d'améliorer la compensation de température.

A cet effet, elle se rapporte à un capteur de pression à fibres optiques et compensation de température, avec deux enroulements de fibres optiques formés chacun sur un cylindre, de façon à garder, en sortie, le même état de polarisation et la même longueur, les cylindres constituant une seule et même pièce mécanique, au moins un enroulement étant soumis à pression à mesurer et exploité en mesures interférométriques sous lumière cohérente, caractérisé en ce que le nombre de tours est tel que les longueurs des fibres sont les mêmes sur les deux enroulements et en ce que l'ensemble est soumis à pression à mesurer et exploité en mesures interlérométriques sous lumière cohérente.

De multiples avantages se dégagent de l'utilisation du capteur selon l'invention :
. il fonctionne avec des fibres multimodes notablement moins chères ;
. les fibres multimodes offrent, de plus, une grande facilité d'usage pour l'injection de la lumière;
. absence d'une fibre optique de référence ;
. compensation intrinsèque de température ;
. solidité mécanique d'ensemble ;
. avantages habituels des fibres optiques : grande sensibilité, isolation galvanique, insensibilité aux perturbations électromagnétiques et sécurité dans les ambiances déflagrantes.

Grâce à sa facilité d'emploi et à sa précision, le capteur selon l'invention permet d'envisager de multiples applications :
. surveillance et contrôle de processus industriels ;
. mesures de débits et plus généralement, d'écoulements de fluides ;
. mesures de pressions dans un milieu ou un environnement rendant impossibles les mesures avec un autre type de capteur, par exemple en milieu explosif.

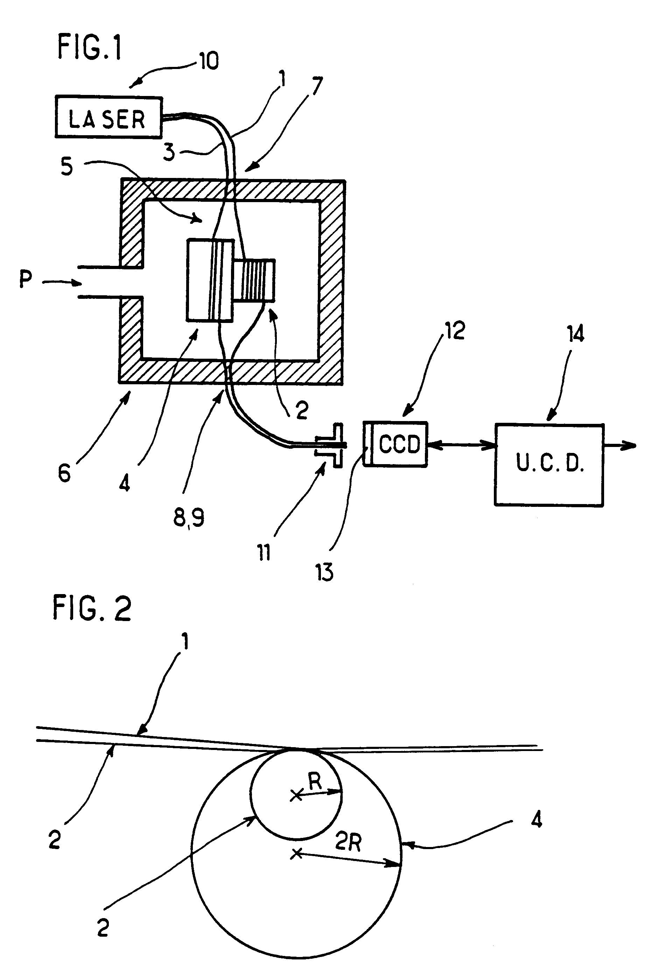

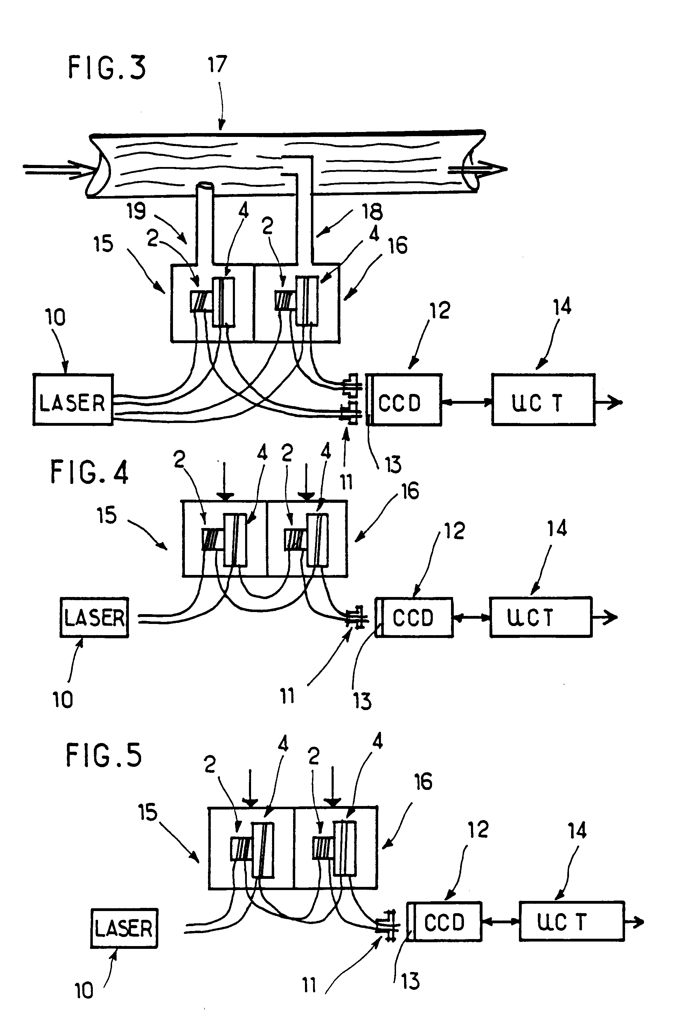

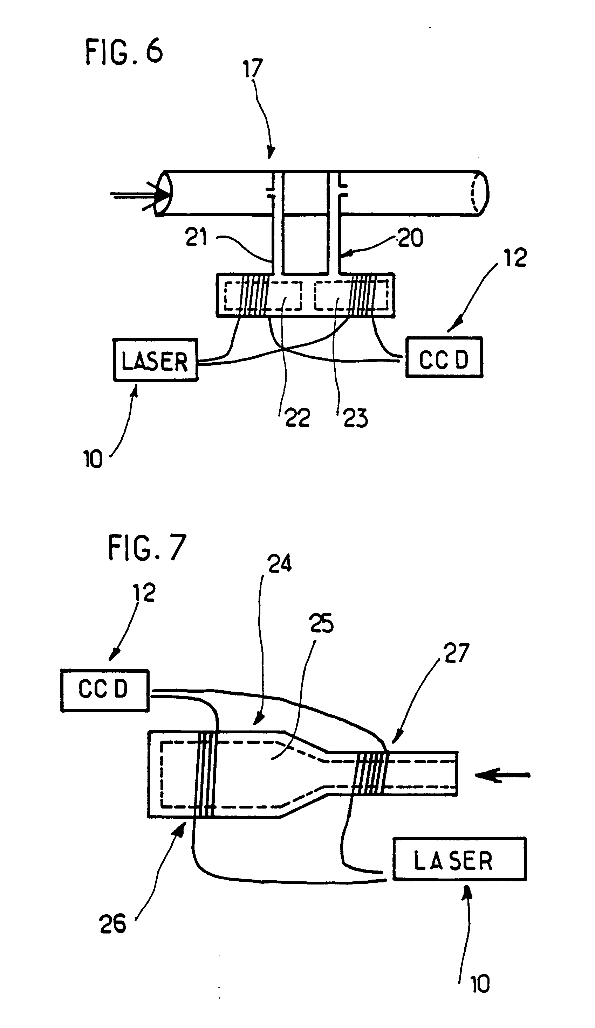

Les caractéristiques techniques et d'autres avantages de l'invention sont consignés dans la description qui suit, effectuée à titre d'exemple non limitatif sur un mode d'exécution en référence aux dessins accompagnants dans lesquels :
. la figure 1 est le schéma du montage de base à une seule cellule de mesure ;
. la figure 2 est une vue en plan de deux boucles de fibres optiques montées sur deux cylindres tangents ;
. la figure 3 est le schéma de montage d'un capteur à deux cellules de mesure utilisant des enroulements montés en parallèle illustrant une application dans une conduite ;
. la figure 4 est le schéma de montage d'un capteur à deux cellules de mesure utilisant des enroulements montés en série croisée ;
. la figure 5 est le schéma de montage d'un capteur à deux cellules de mesure utilisant des enroulements montés en série simple ;
. la figure 6 est le schéma de montage d'un capteur à deux chambres intérieures distinctes à l'intérieur d'un même cylindre ;
. la figure 7 est le schéma d'un exemple de réalisation d'un capteur à une seule chambre intérieure.

L'idée générale inventive consiste à former un capteur de pression à partir de deux enroulements distincts de fibres optiques sur deux cylindres de diamètres différents constituant un même bloc mécanique.

Plus particulièrement, une première fibre optique 1 est enroulée et fixée, par exemple par collage, sur un premier cylindre 2. Une deuxième fibre optique 3 est enroulée et fixée par collage sur un deuxième cylindre 4 solidaire du premier de façon à constituer avec lui une seule et même pièce mécanique ou bloc 5.

Les premier et deuxième cylindres 2 et 4 sont coaxiaux ou excentrés, mais présentent toujours une différence suffisante de diamètre.

Un exemple de rapport de rayon égal à deux est représenté sur la figure 2.

Les cylindres sont réalisés en divers matériaux ou matières, par exemple en métal. L'utilisation de matériaux à faibles coefficients de dilatation thermique, verre de type "DURAN" ou acier de type "INVAR" par exemple, ou possédant de bonnes propriétés d'élasticité et de résistance à la corrosion (céramiques, titane) apporte des avantages particulièrement intéressants en ce qui concerne les performances du capteur.

Ils peuvent être creux, afin de permettre l'équilibrage plus rapide de la température.

Dans le cas de cylindres creux, la pression peut être appliquée à l'intérieur ou à l'extérieur des cylindres.

Dans le cas de cylindres excentrés, la réalisation la plus intéressante consiste à prévoir des cylindres tangents sur une zone étroite comme représenté sur la figure 2 dont le rapport des diamètres permet l'entrée et la sortie des enroulements sur la zone de tangence.

Les rayons de courbure des deux enroulements sont choisis de façon à ce que l'état de polarisation de la lumière à la sortie des fibres soit le même qu'à l'entrée, permettant ainsi aux faisceaux lumineux issus des fibres d'interférer entre eux.

De plus, le nombre de spires sur chaque enroulement est choisi en raison inverse du rayon de courbure correspondant. De cette façon, on obtient deux bobines de fibres de mêmes longueurs qui subissent très sensiblement les mêmes effets de température. Ainsi, le capteur, ne réagissant qu'à une différence d'effets entre les deux enroulements, est peu sensible à la température.

En revanche, la sensibilité des fibres à la pression dans une telle configuration est fonction du rayon de courbure. Comme les enroulements possèdent des rayons de courbure différents, le capteur sera sensible à la pression.

Le bloc 5 est enfermé dans une cellule de mesure 6 en communication avec le fluide dont la pression est à mesurer, par exemple une conduite 7 ou un ballon ou toute autre enceinte dont le volume intérieur est sousmis à une pression P.

Les fibres optiques sortent sur le côté de la cellule par des passages 8 et 9 rendus étanches.

Comme représenté sur la figure 1, le montage de base comprend une seule cellule de mesure. Dans ce cas, il permet une mesure absolue de pression.

On injecte simultanément dans les deux fibres un faisceau de lumière cohérente émise par une source laser 10 soit directement, soit par l'intermédiaire d'un coupleur de fibres optiques ou par un système optique adapté.

Les fibres sont regroupées en extrémité dans un support 11 d'orientation des franges.

On observe les franges et leur défilement à l'aide d'une caméra 12 à réseau ou à barrettes d'éléments photosensibles 13, par exemple connu sous le sigle CCD.

L'image est acquise et traitée par une unité de contrôle et de traitement UCT référencée 14 permettant la mesure du décalage des franges d'interférence.

Les montages à deux cellules 15 et 16 représentés sur les figures 3, 4 et 5 permettent de mesurer, soit une différence de pression, soit une somme de deux pressions : mesure différentielle ou mesure additionnelle.

La mesure de la différence de pression s'avère particulièrement intéressante dans le cas, par exemple, de la surveillance du débit d'un fluide. Il suffit, en effet, de mettre en communication l'une des cellules avec une prise de pression totale et l'autre cellule avec une prise de pression statique. La différence de ces deux pressions rend parfaitement compte de la valeur du débit.

Comme représenté sur les figures, diverses possibilités de branchements des enroulements sont envisageables. Elles donnent toutes des résultats intéressants en sommation ou en différence.

On les examinera successivement, considérant comme une application type, la mesure d'une différence ou d'une somme de pressions dans une conduite 17 avec laquelle les cellules 15 et 16 sont en communication respectivement par des liaisons fluidiques ou hydrauliques 18 et 19 dont la première 18 aboutit en zone centrale de la conduite et présente une ouverture dans la direction opposée à celle du débit pour réaliser une prise de pression totale et l'autre 19 en zone périphérique pour réaliser une prise de pression statique.

Les montages décrits ci-après sont tous susceptibles de fonctionner dans cette application.

Chaque couple d'enroulement réagit à la différence de pression qui agit sur ses fibres. On échange les effets et, selon les branchements, les effets s'additionnent ou se retranchent.

On examinera tout d'abord le montage dit parallèle tel que représenté sur la figure 3.

Dans ce montage on réalise dans l'unité de traitement 14 les différences de pression entre les deux points de mesure afin d'obtenir une variable exploitable pour la surveillance d'un débit.

Bien entendu pour ce montage, on pourra utiliser une seule source laser convenablement partagée en deux faisceaux au moyen par exemple d'un coupleur de fibres optiques ou deux sources laser indépendantes, ou bien encore une autre source à cohérence partielle.

Il en est de même pour l'exploitation des mesures qui se fera préférentiellement par deux barrettes distinctes d'éléments optoélectroniques ou une seule barrette considérée comme deux barrettes juxtaposées par l'unité de traitement, ou encore tout autre dispositif susceptible de détecter et de mesurer un décalage de phase optique.

Le montage suivant dit "en série-croisée" (figure 4) fait correspondre à l'enroulement sur le petit cylindre d'une cellule, l'enroulement sur le grand cylindre de l'autre cellule et inversement pour les autres cylindres.

Il permet également de mesurer des différences de pression par l'exploitation du décalage des franges avec une sensibilité fonction de la différence des rayons de courbures.

Le montage de la figure 5 concerne un branchement en série simple selon lequel les enroulements sur les cylindres de même taille sont disposés en série.

Le décalage des franges rend compte de la somme des pressions ou de la moyenne des deux pressions.

Les figures 6 et 7 se rapportent au cas particulier où l'on applique la pression à l'intérieur des cylindres par deux communications 20 et 21 à partir de la conduite 17. Il s'agit, par exemple de cylindres séparés ou d'un cylindre monobloc à deux cavités 22 et 23 en liaison fluidique avec la conduite 17. Le principal avantage de cette variante consiste à éviter aux fibres optiques d'être mises en contact avec le fluide. Outre une meilleure durée de vie, dans le cas de fluides corrosifs en particulier, ce type de montage offre une simplicité de réalisation accrue comparativement aux montages précédents.

Dans le cas particulier du montage de la figure 6 il s'agit d'un exemple de réalisation simplifiée des montages des figures 3 et 4 dans lequel on applique la pression à l'intérieur des cylindres et on effectue une mesure de différences de pression.

La figure 7 donne un exemple de réalisation d'un capteur de pression absolue présentant un cylindre creux 24 à une seule cavité 25 et à deux enroulements extérieurs 26 et 27 de fibres optiques, celles-ci étant montées en parallèle et exploitées en mode interférométrique.

Il est bien entendu qu'au-delà des moyens décrits, diverses modifications évidentes et variantes simples entrent dans le cadre de la présente invention.

## Revendications

1. Capteur de pression à fibres optiques et compensation de température, avec deux enroulements de fibres optiques (1, 3) formés chacun sur un cylindre (2, 4), de façon à garder, en sortie, le même état de polarisation et la même longueur, les cylindres (2, 4) constituant une seule et même pièce mécanique, au moins un enroulement étant soumis à pression à mesurer et exploité en mesures interférométriques sous lumière cohérente, caractérisé en ce que les cylindres (2, 4) sont de diamètre différents et que le nombre de tours est tel que les longueurs des fibres (1, 3) sont les mêmes sur les deux enroulements et en ce que l'ensemble est soumis à pression à mesurer et exploité en mesures interlérométriques sous lumière cohérente.

2. Capteur selon la revendication 1, caractérisé en ce que les diamètres de l'un et l'autre enroulements sont tels que l'état de polarisation est le même en sortie qu'en entrée.

3. Capteur selon la revendication 1, caractérisé en ce que l'on utilise deux cellules (15, 16) renfermant la même pièce mécanique renfermant les fibres.

4. Capteur selon la revendication 3, caractérisé en ce que les enroulements de chacun des cylindres (2, 4) de chaque cellule (15, 16) sont montés en parallèle.

5. Capteur selon la revendication 3, caractérisé en ce que les enroulements de chacun des cylindres (2, 4) de chaque cellule (15, 16) sont montés en série simple.

6. Capteur selon la revendication 3, caractérisé en ce que les enroulements de chacun des cylindres (2, 4) de chaque cellule (15, 16) sont montés en série croisée.

7. Capteur selon la revendication 1, caractérisé en ce que les enroulements de chacun des cylindres (2, 4) de chaque cellule (15, 16) sont à l'extérieur.

8. Capteur selon la revendication 7, caractérisé en ce que les enroulements sont identiques et montés en parallèle.

9. Capteur selon la revendication 7, caractérisé en ce que les enroulements sont différents et montés en parallèle.

## Claims

1. Fibre-optic pressure transducer with temperature compensation, having two optical fibre windings (1, 3) each formed on a cylinder (2, 4) so as maintain, at the exit, the same polarization state and the same length, the cylinders (2, 4) forming a single mechanical part, at least one winding being exposed to the pressure to be measured and used in interferometric metric measurements under coherent light, characterized in that the cylinders (2, 4) have different diameters and that the number of turns is such that the length of the fibres (1, 3) are the same on the two windings and in that the assembly is exposed to the pressure to be measured and used in interferometric measurements under coherent light.

2. Transducer according to claim 1, characterized in that the diameters of both windings are such that the polarization state is the same at the exit as at the entrance.

3. Transducer according to claim 1, characterized in that use is made of two cells (15, 16) containing the same mechanical part containing the fibres.

4. Transducer according to claim 3, characterized in that the windings of each of the cylinders (2, 4) of each cell (15, 16) are connected in parallel.

5. Transducer according to claim 3, characterized in that the windings of each of the cylinders (2, 4) of each cell (15, 16) are connected in a single series.

6. Transducer according to claim 3, characterized in that the windings of each of the cylinders (2, 4) of each cell (15, 16) are connected in crossed series.

7. Transducer according to claim 1, characterized in that the windings of each of the cylinders (2, 4) of each cell (15, 16) are on the outside.

8. Transducer according to claim 7, characterized in that the windings are identical and connected in parallel.

9. Transducer according to claim 7, characterized in that the windings are different and connected in parallel.

## Patentansprüche

1. Druckaufnehmer mit Lichtleitfasern und Temperaturausgleich mit zwei Lichtleitfaserwicklungen (1, 3), die jeweils auf einem Zylinder (2, 4) dergestalt ausgebildet sind, daß sie am Ausgang die gleiche Polarisation und die gleiche Länge aufweisen, wobei die Zylinder (2, 4) ein einziges und gleiches mechanisches Teil ausbilden und zumindest eine Wicklung zur Messung druckbeaulschlagt und für interlerometrische Messungen mit kohärentem Licht herangezogen wird, dadurch gekennzeichnet, daß die Zylinder (2, 4) unterschiedlichen Durchmessers sind und daß die Anzahl der Lagen sowie die Länge der Fasern (1, 3) auf beiden Wicklungen gleich sind und daß die Einheit zur Messung druckbeaufschlagt und zu interferometrischen Messungen mit kohärentem Licht verwendet wird.

2. Aufnehmer nach Anspruch 1, dadurch gekennzeichnet, daß die Durchmesser beider Wicklungen sowie die Polarisation am Aus- und Eingang gleich sind.

3. Aufnehmer nach Anspruch 1, gekennzeichnet durch die Verwendung zweier Zellen (15, 16), welche das gleiche die Fasern enthaltende mechanische Teil enthalten.

4. Aufnehmer nach Anspruch 3, dadurch gekennzeichnet, daß die Wicklungen eines jeden Zylinders (2, 4) einer jeden Zelle (15, 16) parallel geschaltet sind.

5. Aufnehmer nach Anspruch 3, dadurch gekennzeichnet, daß die Wicklungen jedes Zylinders (2, 4) einer jeden Zelle (15, 16) in Reihe geschaltet sind.

6. Aufnehmer nach Anspruch 3, dadurch gekennzeichnet, daß die Wicklungen jedes Zylinders (2, 4) einer jeden Zelle (15, 16) gekreuzt in Reihe geschaltet sind.

7. Aufnehmer nach Anspruch 1, dadurch gekennzeichnet, daß die Wicklungen jedes Zylinders (2, 4) einer jeden Zelle (15, 16) außerhalb dieser angeordnet sind.

8. Aufnehmer nach Anspruch 7, dadurch gekennzeichnet, daß die Wicklungen gleich ausgebildet und parallel geschaltet sind.

9. Aufnehmer nach Anspruch 7, dadurch gekennzeichnet, daß die Wicklungen unterschiedlich ausgebildet und parallel geschaltet sind.
